# EUROPÄISCHE PATENTSCHRIFT

(11) **EP 3 794 328 B1**
(45) Veröffentlichungstag und Bekanntmachung des Hinweises auf die Patenterteilung: **05.07.2023**
(21) Anmeldenummer: 19713791.2
(22) Anmeldetag: 26.03.2019
(51) Int. Cl.: G01M 5/00

(54) **SENSORIK ZUR FRÜHZEITIGEN ERKENNUNG MECHANISCHER VERÄNDERUNGEN**
SENSOR FOR DETECTING MECHANICAL CHANGES AT AN EARLY STAGE
DISPOSITIF DE DÉTECTION POUR LA RECONNAISSANCE PRÉCOCE DE MODIFICATIONS MÉCANIQUES

(30) Priorität: 18.05.2018 DE 102018111998
(43) Veröffentlichungstag der Anmeldung: 24.03.2021
(73) Patentinhaber: Mack Rides IP GmbH & Co. KG, 79183 Waldkirch (DE)
(72) Erfinder: FRIEDBERGER, Andreas, 79183 Waldkirch (DE)
(74) Vertreter: Westphal, Mussgnug & Partner Patentanwälte mbB
(86) Internationale Anmeldenummer: PCT/EP2019/057630
(87) Internationale Veröffentlichungsnummer: WO 2019/219281

(56) Entgegenhaltungen:
- EP-A2- 0 694 861
- WO-A1-2004/068095
- CA-A1- 3 019 429
- US-A- 5 969 532
- US-A1- 2011 291 802

## Beschreibung

Die vorliegende Erfindung betrifft einen Sensorkopf für eine Sensorik zur frühzeitigen Erkennung mechanischer Veränderungen nach Anspruch 1, eine Sensorik nach Anspruch 5 zur frühzeitigen Erkennung mechanischer Veränderungen sowie ein Fahrgeschäft mit einer solchen Sensorik mit den Merkmalen gemäß Anspruch 16.

Aus dem Stand der Technik sind Sensoriken zur Erhöhung der Sicherheit in unterschiedlichen Ausgestaltungen vorbekannt. Derartige aus dem Stand der Technik vorbekannte Sensoriken erfassen mechanische Veränderungen, die beispielsweise durch Verschleiß oder Ermüdung des Materials auftreten. Die hierzu verwendeten Sensoren erfassen wenigstens eine mechanische Belastung oder mechanische Veränderung des Fahrgeschäfts und vergleichen die erfassten Werte mit Referenzwerten, die in einer Datenbank hinterlegt sind. Treten beispielsweise aufgrund von Verschleiß oder Ermüdung Änderungen in der mechanischen Belastung auf, so werden diese Veränderungen durch die Sensorik frühzeitig erkannt. Alternativ können derartige Sensoriken aus einem ersten Bauteil und einem redundanten Bauteil gebildet werden, wobei die Sensorik das Versagen eines ersten Bauteils durch ein Öffnen oder Schließen eines elektrischen Kontakts bei der Übernahme einer Last durch das redundante Bauteil erfasst. Eine derartige Sensorik ist beispielsweise aus der DE 10 2014 114 338 A1 vorbekannt.

Weiteren Stand der Technik bilden die Druckschriften US 2011 291 802 A1, WO 2004 068 095 A1, EP 0 694 861 A1 und US 5 969 532 A.

Als nachteilig an diesem Stand der Technik hat sich erwiesen, dass die bekannten Sensoriken zur Erhöhung der Sicherheit eines Fahrgeschäfts eine Spannungsversorgung voraussetzen, durch die die Sensoriken mit einer elektrischen Spannung versorgt werden und über Kabel beispielsweise mit einem Überwachungskreis des Fahrgeschäfts verbunden sind, um Fehlerzustände zu detektieren. Insbesondere bei Fahrgeschäften, beispielsweise einer Achterbahn oder einem Wasserfahrgeschäft mit sich bewegenden Fahrzeugen, Kabinen, Schwimmkörpern oder dergleichen, ist für die aus dem Stand der Technik bekannten Sensoriken oftmals das Mitführen einer Spannungsquelle erforderlich, um eine ordnungsgemäße Funktion der Sensorik zu gewährleisten und die erfassten Signale auf einen Überwachungskreis des Fahrgeschäfts zu übertragen. Derartige Sensoriken zur Erhöhung der Sicherheit eines Fahrgeschäfts haben sich als aufwändig und kostenintensiv erwiesen und erhöhen darüber hinaus das Gewicht des Fahrzeugs, der Kabine oder des Schwimmkörpers, wodurch sich weitere Nachteile ergeben.

Es ist daher die Aufgabe der vorliegenden Erfindung eine Sensorik zur frühzeitigen Erkennung mechanischer Veränderungen, insbesondere Materialermüdung und Verschleiß und somit zur Erhöhung der Sicherheit beispielsweise eines Fahrgeschäfts bereitzustellen, die die Nachteile der aus dem Stand der Technik bekannten Sensoriken beseitigt. Insbesondere soll die Sensorik zur Erhöhung der Sicherheit, ohne mit einer Spannungsquelle verbunden zu sein, betrieben werden können und materialunabhängige mechanische Veränderungen, insbesondere bei einem Fahrgastgeschäft, erfassen können.

Ein Großteil der Bauteile zum Beispiel eines Fahrgeschäfts sind gewöhnlich aus einem metallischen Werkstoff hergestellt, jedoch existieren ebenfalls Bauteile und sogar ganze Fahrgeschäfte, die im Wesentlichen aus nicht metallischen Werkstoffen, beispielsweise Kunststoff oder Holz, hergestellt sind.

Die erfindungsgemäße Sensorik soll ohne Einschränkung zur Erfassung von mechanischen Veränderungen für sämtliche Werkstoffe einsetzbar sein.

Auch soll die Sensorik eine redundante Detektion von mechanischen Veränderungen, insbesondere Materialermüdung und Verschleiß, ermöglichen, die durch unterschiedliche Messmethoden erfasst werden können, wodurch erfasste mechanische Veränderungen an dem Fahrgeschäft unabhängig voneinander verifiziert werden können, wodurch fehlerhafte Detektionen reduziert werden und in der Gesamtheit zu einer Erhöhung der Sicherheit des Fahrgeschäfts beigetragen wird.

Die Lösung der genannten Aufgaben erfolgt mittels eines Sensorkopfs gemäß Anspruch 1, einer Sensorik gemäß Anspruch 5 sowie eines Fahrgeschäfts mit den Merkmalen des Anspruchs 16. Die Unteransprüche haben vorteilhafte Weiterbildungen der Erfindung zum Inhalt.

Die erfindungsgemäße Sensorik zur frühzeitigen Erkennung mechanischer Veränderungen umfasst ein Sensorgehäuse mit einem Aufnahmebereich und einem Sensorkopf, wobei der Sensorkopf in dem Aufnahmebereich an dem Sensorgehäuse gehalten ist und das Sensorgehäuse zumindest bereichsweise überragt. Das Sensorgehäuse kann als rotationssymmetrisches Edelstahlrohr mit einem Außengewinde ausgebildet sein, wobei weiter bevorzugt das Außengewinde ein metrisches Gewinde ist und der Aufnahmebereich in dem Sensorgehäuse nach Art einer koaxial ausgebildeten Sacklochbohrung ausgeführt ist. Darüber hinaus umfasst der Sensorkopf mindestens einen Bruchkörper, der als Ampulle ausgebildet ist, mit einem Messleiter.

Die Ampulle ist vorzugsweise ein spröder Volumenkörper. Der mindestens eine Messleiter ist elektrisch mit einer in dem Sensorgehäuse angeordneten Messelektronik verbunden, wobei die in dem Sensorgehäuse angeordnete Messelektronik den elektrischen Widerstand des Messleiters des Sensorkopfs erfasst. Die Größe des Sensorkopfs und der Aufnahmebereich des Sensorgehäuses sind dabei derart aufeinander abgestimmt, dass die Ampulle des Sensorkopfs wenigstens bereichsweise aus dem Aufnahmebereich herausragt und in diesem Bereich ungeschützt mechanischen Veränderungen ausgesetzt ist, die in dem zu überwachenden Bauteil auftreten. Bei einer mechanischen Veränderung des zu überwachenden Bauteils wird die Ampulle zerstört oder verformt und der elektrische Widerstand des Messleiters verändert sich bzw. die elektrische Leitfähigkeit des Messleiters wird zerstört, wodurch die mechanische Veränderung des zu überwachenden Bauteils durch ein elektrisches Signal erfassbar ist. Hierzu ist die Messelektronik bevorzugt beidenends mit dem Messleiter verbunden. Die Messelektronik ermöglicht die Erfassung einer Änderung des elektrischen Widerstands durch eine elektrische Verbindung mit den beiden Enden des Messleiters. Hierzu ist der Messleiter mit dem Messkörper gekoppelt.

Darüber hinaus ist es möglich, dass der mindestens eine Messleiter mit einem RFID Sender-Empfänger-System verbunden ist, oder an einem herkömmlichen Rückführ- oder Not-Aus-Kreis angeschlossen ist.

Eine weitere vorteilhafte Ausgestaltung der vorliegenden Erfindung sieht vor, dass die Ampulle des Sensorkopfs aus einem elektrisch isolierenden Werkstoff hergestellt ist, und dass der mindestens eine Messleiter sich als Kontaktschleife in oder auf dem Bruchkörper erstreckt. Der mindestens eine Messleiter kann vorzugsweise auf die Ampulle aufgelegt, eingeformt oder eingearbeitet sein, wobei die Ampulle den Messleiter vor mechanischen Einwirkungen schützt und einen Kurzschluss zwischen dem Messleiter und benachbarten Bauteilen verhindert.

Darüber hinaus kann der mindestens eine Messleiter auf der von dem Medium abgewandten Oberfläche der Wandung angeordnet sein, wobei weiter bevorzugt eine Schutzschicht auf die Wandung aufgetragen wird, die den Messleiter bzw. die Kontaktschleife schützt, diese elektrisch isolierend abschirmt und darüber hinaus auf der Wandung fixiert.

Ferner kann der mindestens eine Messleiter in Form eines elektrischen Materials auf die Ampulle oder in deren Wandung eingebracht sein.

Bevorzugt ist, wenn mindestens eine elektrische Verbindung zwischen dem mindestens einen Messleiter des Sensorkopfs und der Messelektronik in dem Sensorgehäuse eine lösbare Steckverbindung ist. Der Sensorkopf kann dadurch auf besonders einfache Art und Weise ausgetauscht werden, wobei gleichzeitig die mindestens eine elektrische Verbindung hergestellt wird. Die mindestens eine elektrische Verbindung ist bevorzugt in dem Aufnahmebereich in dem Sensorgehäuse angeordnet. Durch die Austauschbarkeit des Sensorkopfs ist darüber hinaus eine Art Baukastensystem realisiert. Das Sensorgehäuse kann ein Standardbauteil sein und der Sensorkopf jeweils ein für den Einsatzzweck angepasstes Bauteil, wobei die Sensorköpfe sowohl in den Abmessungen, also um das Maß mit dem die Sensorköpfe aus dem Aufnahmebereich das Sensorgehäuse überragen, als auch in der Widerstandsfähigkeit des Bruchkörpers sowie des gewählten Mediums variabel sein können. Je widerstandsfähiger der Bruchkörper ausgebildet ist, desto stärker müssen die zu erfassenden mechanischen Veränderungen an dem zu überwachenden Bauteil ausfallen.

Der Sensorkopf ist weiter bevorzugt durch den elektrischen Kontakt form- und/oder kraftschlüssig in dem Aufnahmebereich am Sensorgehäuse gehalten, wodurch neben den elektrischen Kontakten zur Arretierung des Sensorkopfs in dem Aufnahmebereich keine weiteren Befestigungsmittel notwendig sind.

Eine weitere vorteilhafte Ausgestaltung der vorliegenden Erfindung sieht vor, dass in dem Aufnahmebereich zwischen dem Sensorgehäuse und dem Sensorkopf eine Führung vorgesehen ist, durch die der Sensorkopf von dem Sensorgehäuse schwingungsmechanisch entkoppelt bzw. gedämpft gelagert gehalten ist. Bevorzugt ist die Führung aus einem Elastomer oder einem gummielastischen Polymer hergestellt, wobei weiter bevorzugt die Führung eine Klemmkraft auf den Sensorkopf ausübt. Die Klemmkraft der Führung hält den Sensorkopf in der Aufnahmeöffnung. Darüber hinaus verhindert die Führung ein Versagen des Bruchkörpers durch eine mechanische Interaktion des Sensorkopfs mit dem Sensorgehäuse, beispielsweise aufgrund von Schwingungen an dem zu überwachenden Bauteil des Fahrgeschäfts.

Es ist auch vorteilhaft, wenn die Ampulle aus einem spröden Werkstoff hergestellt ist. Insbesondere hat es sich weiterhin als vorteilhaft erwiesen, wenn die Ampulle aus einem keramischen Werkstoff, aus Glas oder Glaskeramik, hergestellt ist. Insbesondere ist Glas als Werkstoff bevorzugt, da Glas sowohl hervorragende mechanische, elektrische und chemische Eigenschaften aufweist und ein Sensorkopf mit einer solchen Ampulle auch in unterschiedlichen Größen kostengünstig herstellbar ist. Der Werkstoff oder die Werkstoffkombination aus dem die Ampulle hergestellt ist, kann jedoch beliebig gewählt werden. Beispielsweise können auch Kunststoffe verwendet werden.

Erfindungsgemäß ist der Bruchkörper als Ampulle ausgebildet ist und eine Wandung aufweist, die ein Medium umschließt. Das Medium wird als Indikator verwendet für optische und/oder visuelle und/oder akustische und/oder olfaktorische Messverfahren. Dadurch wird eine optische und/oder visuelle und/oder akustische und/oder olfaktorische Früherkennung der mechanischen Veränderung des zu überwachenden Bauteils ermöglicht. Im Zusammenhang mit der vorliegenden Erfindung wird unter einem dichten Behälter ein Behälter verstanden, der so konfiguriert ist, dass er im Ausgangszustand, also unzerstört oder unverformt, das jeweils eingeschlossene Medium dicht, also auch diffusionsfrei, aufbewahrt. Weiterhin kann im Zusammenhang dieser Erfindung weiterhin unter einem Medium jede Art von einem Medium im festen, flüssigen oder gasförmigen Aggregatzustand verstanden werden, welches ström-, fließ- und/oder schüttfähig sein kann. Schüttfähig ist ein Medium im festen Aggregatzustand, wenn es ein körniges oder auch stückiges Gemenge umfasst.

Gemäß der beanspruchten Erfindung ist der mindestens eine Messleiter in oder auf der Wandung der Ampulle angeordnet. Die Wandung schützt den Messleiter vor mechanischen Einwirkungen und ein Kurzschluss zwischen dem Messleiter und benachbarten Bauteilen kann durch die Wandung verhindert werden. Weiterhin hat es sich als vorteilhaft erwiesen, wenn das Medium in der Ampulle elektrisch leitfähig ist und der mindestens eine Messleiter aus wenigstens einer ersten Elektrode und wenigstens einer zweiten Elektrode ausgebildet ist. Die erste Elektrode und die zweite Elektrode sind in der Ampulle zueinander beabstandet angeordnet und ragen in das Medium. Dementsprechend ist durch die Messelektronik in dem Sensorgehäuse der elektrische Widerstand zwischen der wenigstens einen ersten Elektrode und der wenigstens einen zweiten Elektrode erfassbar. Bei einer Zerstörung der Ampulle aufgrund von mechanischen Veränderungen an dem zu überwachenden Bauteil, strömt das Medium aus der Ampulle und der elektrische Widerstand zwischen der wenigstens einen ersten Elektrode und der wenigstens einen zweiten Elektrode ändert sich, wodurch die mechanische Veränderung an dem Bauteil elektrisch erfassbar ist.

Gemäß einer weiteren vorteilhaften Ausgestaltung der vorliegenden Erfindung ist das Medium in der Ampulle eine Flüssigkeit und/oder ein Gas.

Das Medium ist erfindungsgemäß in der durch den Bruchkörper gebildeten Ampulle mit einem optisch und/oder visuell und/oder olfaktorisch wahrnehmbaren Marker versehen, der bei einer Zerstörung des Bruchkörpers zusammen mit dem Medium ausläuft, ausgeschüttet wird oder ausströmt und das zu überwachende wenigstens eine Bauteil markiert. Die Markierung mittels des Markers kann visuell, beispielsweise kamerabasiert, oder visuell durch ein Bedienpersonal des Fahrgeschäfts ausgelesen bzw. überwacht werden.

Olfaktorisch kann der Marker Gerüche freigeben, die von einem Bedienpersonal sensuell wahrgenommen werden können oder als Lockstoff für Tiere, beispielsweise Insekten, dienen, die wiederum als Marker dienen. Die Flüssigkeiten benachbarter Sensoriken können mit unterschiedlichen optisch und/oder visuell und/oder olfaktorisch erfassbaren Markern versehen sein, so dass eine Differenzierung zwischen den benachbarten Sensoriken vorgenommen werden kann. Auch kann das Medium chemische Additive enthalten, die konfiguriert sind, eine chemische Reaktion auszulösen, wodurch eine verbesserte sensuelle Wahrnehmung erreicht werden kann. Ein solches chemisches Additiv kann beispielsweise eine ionische Flüssigkeit sein. Das Medium kann weiterhin eine nicht-newtonsche Flüssigkeit oder Thermoflüssigkeit umfassen. Auch kann das Medium ein Rauchgas, -pulver oder ein Knallgas sein oder es können geruchsintensive Additive, wie beispielsweise Duftstoffe z.B. ätherische Öle, verwendet werden, die als angenehm oder unangenehm empfunden werden. Beispielsweise können auch Schwefelwasserstoffe, welche umgangssprachlich als "Stinkbombe" bekannt sind, oder Abwehrstoffe, welche sprachlich als "Pfeffersprays" bekannt sind, verwendet werden.

Darüber hinaus kann nach einer Maßgabe der vorliegenden Erfindung das Medium ganz oder teilweise schüttfähig sein und ein im festen Aggregatzustand körniges oder auch stückiges Gemenge umfassen. Das Medium kann beispielsweise Glas-, Keramik-, Kunststoff-, Metallkörner und/oder -perlen und/oder -plättchen umfassen. Das ganz oder teilweise schüttfähige Medium kann eine Reaktion auslösen.

Gemäß einer weiteren Ausgestaltung der vorliegenden Erfindung kann das Medium in dem Sensorkopf konfiguriert sein, bei einem bestimmten Druck oder einer Kraft auf den Sensorkopf auf den mindestens einen Messleiter einzuwirken und ein elektrisches Signal durch Trennen oder Öffnen einer elektrischen Verbindung erzeugen.

Weiterhin hat es sich als vorteilhaft erwiesen, wenn das Medium in dem Sensorkopf druckbeaufschlagt ist. Durch die Druckbeaufschlagung des Mediums ist sichergestellt, dass bereits feinste Haarrisse in dem Sensorkopf dazu führen, dass das Medium aus dem Sensorkopf austritt und eine optisch und/oder visuell wahrnehmbare Markierung hinterlässt. Das Medium in dem Sensorkopf kann beispielsweise einen Überdruck von wenigen Pascal bis hin zu mehrfachem atmosphärischem Druck aufweisen.

Eine weitere bevorzugte Ausgestaltung der erfindungsgemäßen Sensorik sieht vor, dass die Sensorik eine Funkeinheit aufweist, durch die der elektrische Widerstand des mindestens einen Messleiters bzw. die elektrische Leitfähigkeit des mindestens einen Messleiters abgefragt werden kann. Die Funkeinheit kann als separates elektrisches Bauteil in dem Sensorgehäuse angeordnet sein, oder in die Messelektronik integriert sein. Die Funkeinheit ist dazu eingerichtet, mit einem Lesegerät des Fahrgeschäfts zu kommunizieren.

Weiterhin ist es besonders bevorzugt, wenn die Funkeinheit ein RFID-Chip ist, der via einer UHF-Frequenz angesteuert und ausgelesen werden kann. Die jeweilige Funkeinheit hat eine eindeutige Kennung, die bei einer Abfrage an das Lesegerät weitergegeben wird, wodurch eine mögliche Detektion einer mechanischen Veränderung an dem zu überwachenden mindestens einen Bauteil diesem exakt zugeordnet werden kann. Durch die Frequenz des Lesegeräts wird der RFID-Chip angeregt und erzeugt einen für eine kurze Zeit andauernden eigenen Strom bzw. eine Spannung, der, bzw. die durch den Messleiter des Sensorkopfs geleitet wird. Das Durchleiten dieses Stroms bzw. der Spannung ermöglicht eine Überprüfung des elektrischen Widerstandes bzw. der elektrischen Leitfähigkeit des Messleiters, ohne dass eine mitgeführte Energiequelle erforderlich ist. Das Lesegerät empfängt das Signal, wobei weiter bevorzugt das Lesegerät in einen Überwachungskreis des Fahrgeschäfts eingebunden ist. Bei einer Fehlerdetektion kann ein Fehlersignal erzeugt werden und beispielsweise ein Not-Stopp des Fahrgeschäfts durchgeführt werden.

Eine weitere vorteilhafte Ausgestaltung der Erfindung sieht vor, dass der Sensorkopf und/oder das Sensorgehäuse im Wesentlichen eine zylindrische Form aufweisen bzw. aufweist, und dass der Sensorkopf in dem Aufnahmebereich bereichsweise radial durch das Sensorgehäuse umgeben ist. Insbesondere die radiale Form des Sensorkopfes bzw. der Ampulle ermöglicht eine besonders einfache Herstellung.

Weiterhin ist es vorteilhaft, wenn das Sensorgehäuse wenigstens ein Befestigungsmittel aufweist, das eingerichtet ist, das Sensorgehäuse an dem wenigstens einen zu überwachenden Bauteil zu befestigen. Das Befestigungsmittel kann eine form- und/oder kraftschlüssige Verbindung mit dem wenigstens einen zu überwachenden Bauteil herstellen, wobei ebenfalls stoffschlüssige Verbindungen im Sinne dieser Erfindung zur Befestigung des Sensorgehäuses an dem wenigstens einen zu überwachenden Bauteil verwendet werden können.

Besonders bevorzugt ist das Befestigungsmittel als standardisiertes Außengewinde ausgebildet, beispielsweise als metrisches ISO-Feingewinde gemäß DIN 13, wodurch die Sensorik ohne nennenswerten Aufwand montiert und positioniert werden kann.

Das Sensorgehäuse kann darüber hinaus einen Sensorkabelanschluss aufweisen, der eingerichtet ist, mit einem Überwachungskreis eines Fahrgeschäfts verbunden zu werden. Der Überwachungskreis kann beispielsweise ein Rückführkreis, ein Notauskreis oder dergleichen sein, wobei der Messleiter bevorzugt als ein Öffner betrieben werden kann. Ferner ist es denkbar, dass ein Kabelbruch erkannt und ausgelesen wird. Insbesondere kann eine Kombination einer kabelgebundenen Anbindung an den Überwachungskreis, zusammen mit einer kabellosen Überwachung mittels der Funkeinheit und einer möglichen optischen und/oder visuellen Detektion des Mediums eine mehrfache Redundanz schaffen, die eine fehlerhafte Detektion von mechanischen Änderungen an dem wenigstens einen zu überwachenden Bauteil reduziert.

Darüber hinaus es besonders vorteilhaft, wenn der Messleiter des Sensorkopfes als Kontaktschleife ausgebildet ist, wobei die Kontaktschleife aus einem U-förmigen elektrischen Leiter ausgebildet ist, der sich im Wesentlichen von dem Ampullenfuß bis zum Ampullenkopf und zurück in oder auf der Ampulle oder einer Wandung der Ampulle erstreckt. Die beiden freien Enden des elektrischen Leiters sind dabei mit jeweils einer Kontaktstelle verbunden, die eingerichtet ist, mittels einer elektrischen Verbindung mit der Messelektronik in dem Sensorgehäuse elektrisch verbunden zu werden.

Darüber hinaus ist es weiterhin besonders vorteilhaft, wenn das in der Ampulle eingeschlossene Medium elektrisch leitfähig ist und der mindestens eine Messleiter aus wenigstens einer ersten Elektrode und wenigstens einer zweiten Elektrode ausgebildet ist. Die erste Elektrode und die zweite Elektrode sind in der Ampulle zueinander beabstandet und ragen in das Medium. Dementsprechend ist durch die Messelektronik in dem Sensorgehäuse der elektrische Widerstand zwischen der wenigstens einen ersten Elektrode und der wenigstens einen zweiten Elektrode erfassbar. Bei einer Zerstörung der Ampulle das Medium aus der Ampulle aus und die elektrische Verbindung zwischen der wenigstens einen ersten Elektrode und der wenigstens einen zweiten Elektrode ist unterbrochen.

Erfindungsgemäß ist das Medium in dem Sensorkopf mit einem Marker versehen. Der Marker ist besonders bevorzugt ein visuell und/oder optisch erfassbares Mittel. Weiter bevorzugt ist der Marker derart beschaffen, dass das Medium fluoreszierend ist. Auch hat es sich als vorteilhaft erwiesen, wenn das Medium in dem Sensorkopf bzw. in der Ampulle druckbeaufschlagt ist.

Eine weitere Ausgestaltung des Sensorkopfes sieht vor, dass die Messelektronik und/oder die Funkeinheit an oder in dem Sensorkopf angeordnet sind, bzw. ist. Weiterhin kann die Messelektronik auf oder in der Wandung der Ampulle angeordnet sein.

Ein weiterer Aspekt der vorliegenden Erfindung betrifft ein Fahrgeschäft mit wenigstens einer erfindungsgemäßen Sensorik. Die erfindungsgemäße Sensorik kann ohne nennenswerten Aufwand an dem wenigstens einen zu überwachenden Bauteil des Fahrgeschäfts entweder bei der Herstellung des Fahrgeschäfts angebracht werden, oder bei bereits bestehenden Fahrgeschäften ohne nennenswerten Verkabelungsaufwand nachgerüstet werden.

Eine weitere vorteilhafte Ausgestaltung der vorliegenden Erfindung sieht vor, dass das Fahrgeschäft wenigstens ein Lesegerät aufweist, das eingerichtet ist, mit der Funkeinheit der Sensorik zur Erhöhung der Sicherheit eines Fahrgeschäfts zu kommunizieren. Das Lesegerät ist beispielsweise bei einer Achterbahn entlang einer Schienenführung positioniert, so dass das Lesegerät beim Vorbeifahren des Fahrzeugs mit wenigstens einer erfindungsgemäßen Sensorik den elektrischen Widerstand des mindestens einen Messleiters bzw. die elektrische Leitfähigkeit des mindestens einen Messleiters erfassen kann.

Darüber hinaus ist es vorteilhaft, wenn das Fahrgeschäft wenigstens ein kamerabasiertes Überwachungssystem aufweist, durch welches eine optische Detektion des Mediums möglich ist. Weiter bevorzugt kann das Überwachungssystem eine Strahlungsquelle aufweisen, durch die zur optischen Detektion des Mediums entsprechende Lichtwellen erzeugt werden, die das Medium zum Fluoreszieren anregen. Die Lichtquelle kann bevorzugt UV-Licht ausstrahlen.

Nachfolgend werden unter Bezugnahme auf die begleitenden Zeichnungen zwei erfindungsgemäße Ausführungsbeispiele der vorliegenden Erfindung im Detail beschrieben. Es zeigen:
- Figur 1: eine perspektivische Darstellung eines ersten Ausführungsbeispiels der erfindungsgemäßen Sensorik mit einem Sensorgehäuse und einem an dem Sensorgehäuse in einen Aufnahmebereich eingesetzten Sensorkopf, der einen als Glasampulle ausgebildeten Bruchkörper aufweist,
- Figur 2: eine vereinfachte geschnittene Darstellung der Sensorik gemäß Figur 1,
- Figur 3: eine perspektivische Darstellung eines zweiten Ausführungsbeispiels der erfindungsgemäßen Sensorik,
- Figur 4: eine weitere perspektivische Darstellung des Ausführungsbeispiels gemäß Figur 3,
- Figur 5: eine schematische und geschnittene Darstellung der Sensorik gemäß Figur 1, und
- Figur 6: eine schematische und geschnittene Darstellung einer Weiterbildung des Sensorkopfs,
- Figur 7: eine schematisch dargestellte Einbausituation der erfindungsgemäßen Sensorik gemäß Figur 1 an einem schienengeführten Fahrzeug eines Fahrgeschäfts, und
- Figur 8: eine Detaildarstellung der Einbausituation der Sensorik gemäß Figur 7.

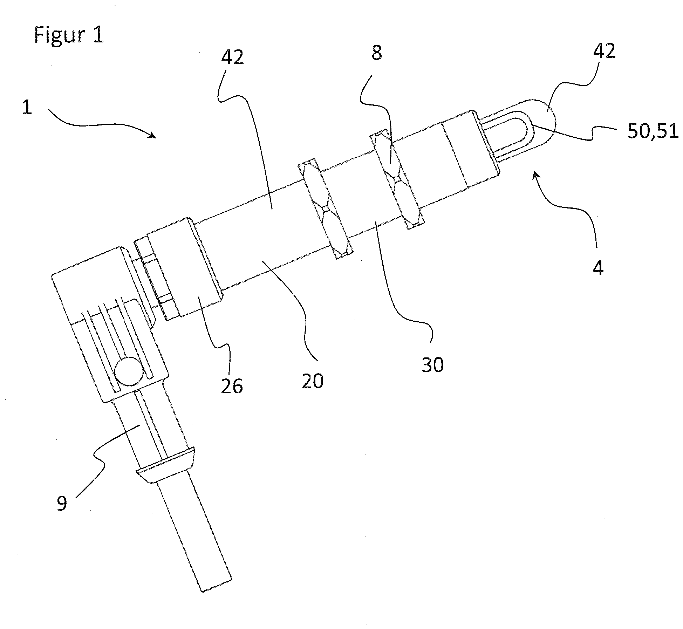

Nachfolgend werden unter Bezugnahme auf die Figuren 1 bis 8 zwei bevorzugte Ausführungsbeispiele einer erfindungsgemäßen Sensorik 1 mit einem Sensorkopf 4 und eine Weiterbildung des Sensorkopfs 4 im Detail beschrieben, wobei funktional gleiche Teile mit den gleichen Bezugszeichen versehen sind.

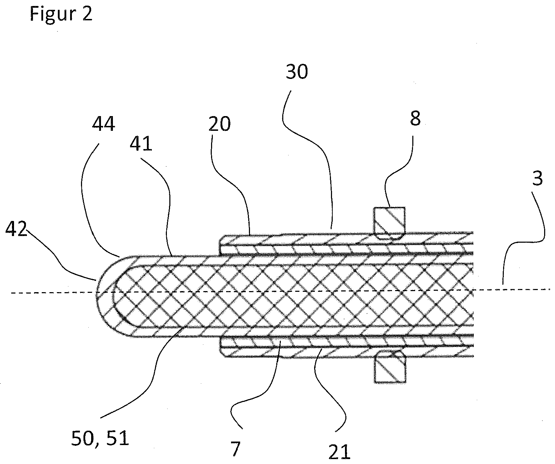

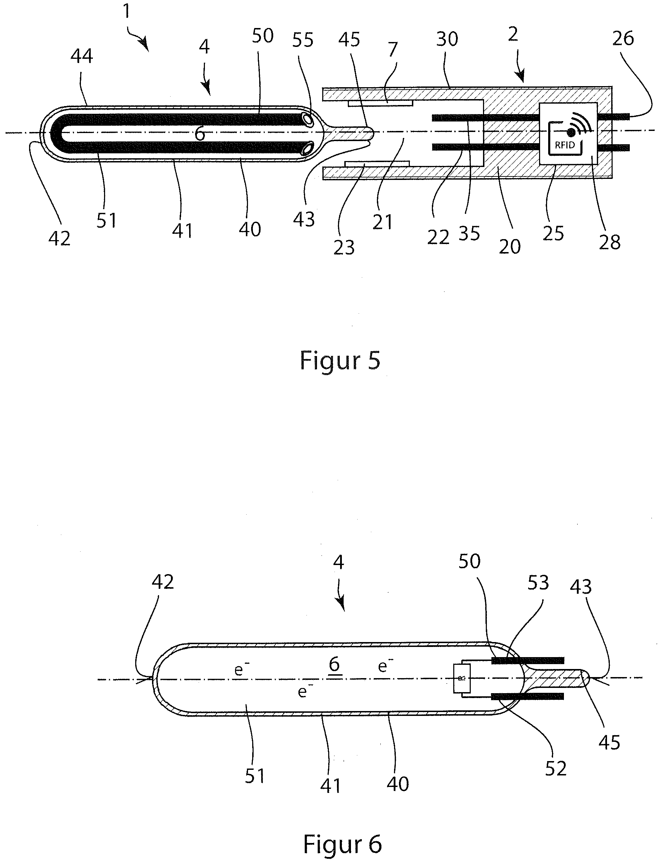

Figur 1 ist ein erstes erfindungsgemäßes Ausführungsbeispiel der Sensorik 1 zu entnehmen. Die Sensorik 1 umfasst ein Sensorgehäuse 2 und einen Sensorkopf 4, wobei das Sensorgehäuse 2 aus einem hohlzylindrischen Gehäusekörper 20 gebildet ist, der einen als Ausnehmung ausgebildeten Aufnahmebereich 21 aufweist. Wie insbesondere der Schnittdarstellung in Figur 2 oder 5 zu entnehmen ist, ist der Gehäusekörper 20 koaxial zu einer Längsachse 3 ausgebildet und umgibt einen ebenfalls zu der Längsachse 3 koaxial ausgerichteten Aufnahmebereich 21.

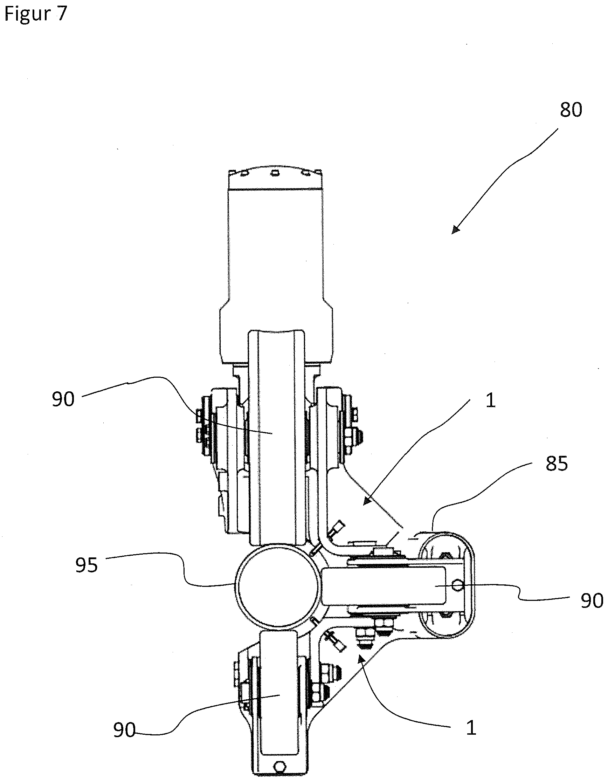

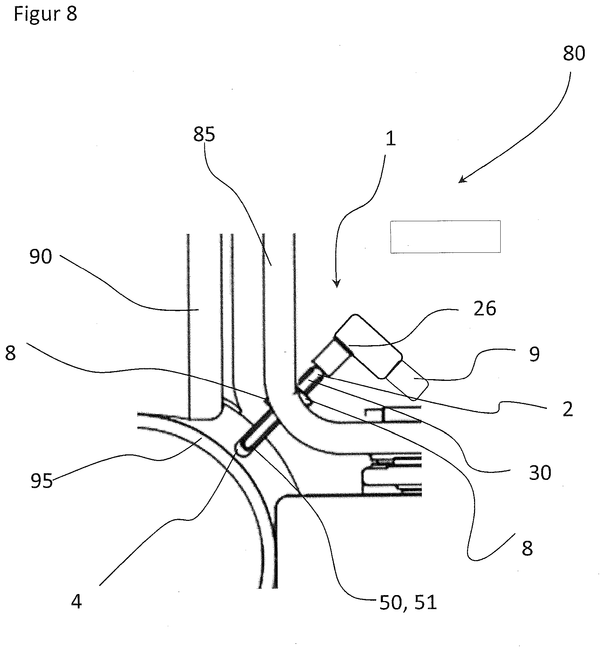

Das Sensorgehäuse 2 bzw. der Gehäusekörper 20 weist ein Befestigungsmittel 30 auf, das im dargestellten Ausführungsbeispiel als Feingewinde M12x1 ausgebildet ist, wodurch das Sensorgehäuse 2 an dem wenigstens einem zu überwachenden Bauteil, wie beispielsweise in den Figuren 7 und 8 dargestellt ist, befestigt wird.

Der Aufnahmebereich 21 ist auf Seiten eines ersten Endes des Gehäusekörpers 20 angeordnet, während dessen auf Seiten eines zweiten Endes des Gehäusekörpers 20 ein Sensorkabelanschluss 26 vorgesehen ist. Durch den Sensorkabelanschluss 26 kann eine elektrische Verbindung beispielsweise mit einem Überwachungskreis eines Fahrgeschäfts hergestellt werden.

Der Sensorkopf 4 ist an dem Aufnahmebereich 21 an dem Sensorgehäuse 2 angeordnet, bzw. in den als Ausnehmung ausgebildeten Aufnahmebereich 21 eingesetzt, und steht entlang der Längsachse 3 von dem ersten Ende des Gehäusekörpers 20 frei ab.

Der Sensorkopf 4 umfasst einen Bruchkörper 40 mit mindestens einem Messleiter 50, wobei der Bruchkörper 40 aus einem Glaswerkstoff als Ampulle hergestellt sein kann und eine Wandung 41 aufweisen kann, die ein Medium 6 einschließt.

Das Medium 6 in der Ampulle 40 kann ein beliebiges Medium sein, beispielsweise eine Flüssigkeit mit hoher Fluidität. Weiterhin kann das Medium mit einem fluoreszierenden Mittel versetzt sein.

Im dargestellten Ausführungsbeispiel weist die Ampulle 40 zwei Messleiter 50 auf, die jeweils als elektrisch leitfähige U-förmige Kontaktschleifen 51 ausgebildet sind. Die Messleiter 50 bzw. die Kontaktschleifen 51 erstrecken sich auf der Außenseite der Wandung 41, also der von dem Medium 6 abgewandten Seite, zwischen einem Ampullenfuß 43 und einem Ampullenkopf 42. Weiterhin zeigen die Figuren 1 und 2, dass sich die Kontaktschleifen 51 im Wesentlichen über die gesamte Länge der Ampulle 40 erstrecken.

Dabei ist von Bedeutung, dass die Kontaktschleife 51 sich stets mindestens bereichsweise über den Bereich erstreckt, der frei von dem Aufnahmebereich 21 bzw. Sensorgehäuse 2 von dem ersten Ende absteht.

Im Bereich des Ampullenfußes 43 weist die Ampulle 40 zwei Kontaktstellen 55, siehe Figur 5, pro Kontaktschleife 51 auf, die durch den Messleiter 50 bzw. die Kontaktschleife 51 miteinander elektrisch verbunden sind. Jeder Messleiter 50 weist demnach beidenends eine Kontaktstelle 55 auf.

Weiterhin zeigt Figur 2, dass der Sensorkopf 4 zwei Kontaktschleifen 51 aufweist, die diametral um die Längsachse 3 angeordnet sind. Um die Kontaktschleifen 51 zu schützen, ist der Bruchkörper 40 mit einem Überzug 44 versehen, der beispielsweise aus einem spröden Werkstoff, z. B. Glas oder Keramik hergestellt ist. Alternativ können für den Überzug 44 auch andere elektrisch isolierende Werkstoffe verwendet werden, insbesondere Kunststoff, Lack oder dergleichen.

Zwischen dem Sensorgehäuse 2 und dem Sensorkopf 4 ist in dem Aufnahmebereich 21 eine Führung 7 vorgesehen, durch die der Sensorkopf 4 einerseits in dem Aufnahmebereich 21 dämpfend gelagert gehalten ist. Darüber hinaus kann andererseits durch eine geeignete Dimensionierung der Führung 7 diese als Klemmeinrichtung 23 verwendet werden, durch welche der Sensorkopf 4 in dem Aufnahmebereich 21 arretiert ist. Die Führung 7 ist bevorzugt aus einem gummielastischen Werkstoff hergestellt, beispielsweise einem Elastomer-, Gummi- oder Latex-Werkstoff.

Die jeweilige Kontaktschleife 51 ist mittels der Kontaktstellen 55 und elektrischen Verbindungen 35 mit einer Messelektronik 25, siehe Figur 5, verbunden, wobei die Messelektronik 25 den Sensorkabelanschluss 26 mit dem mindestens einen Messleiter 50 verbindet. Die Messelektronik 25 kann darüber hinaus eine oder mehrere elektrische Schaltungen oder Logikbausteine aufweisen, durch die eine oder mehrere Messleiter 50 parallel oder in Reihe geschaltet sind. Ebenfalls kann die Messelektronik 25, wie Figur 5 zeigt, eine Funkeinheit 28 aufweisen.

Die Grundfunktion der Messelektronik 25 ist es, eine elektrische Verbindung zwischen dem wenigstens einen Messleiter 50 und dem Sensorkabelanschluss 26 herzustellen, so dass die Sensorik 1 die elektrische Leitfähigkeit bzw. den elektrischen Widerstand des Messleiters 50 durch einen Überwachungskreis eines Fahrgeschäfts bestimmen kann.

Die elektrische Verbindung zwischen dem Messleiter 50 und der Messelektronik 25 kann durch eine Steckverbindung realisiert werden, welche beispielsweise in Figur 5 seitens des Sensorgehäuses 2 und in Figur 6 seitens des Sensorkopfs 4 bewerkstelligt wird.

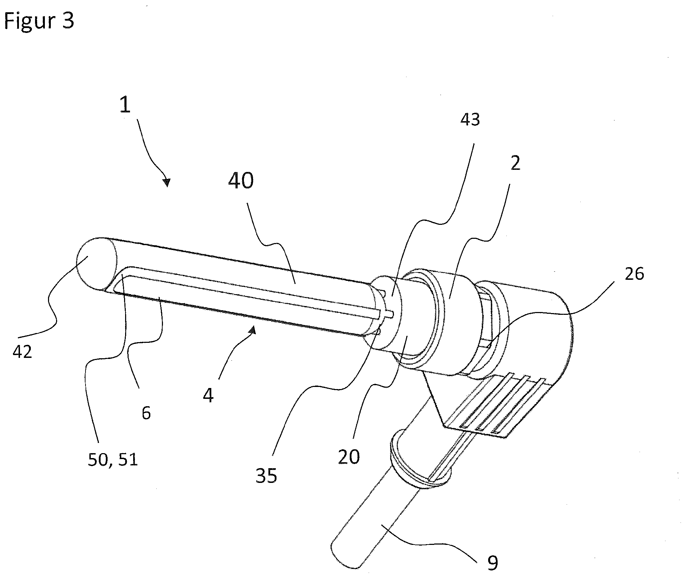

Das in der Figur 3 dargestellte Ausführungsbeispiel unterscheidet sich von dem in den Figuren 1 und 2 dargestellten Ausführungsbeispiel in der Ausgestaltung des Sensorgehäuses 2, wobei ersichtlich ist, dass das Sensorgehäuse 2 ein im wesentlichen zylindrischer Körper ist, der beispielsweise eingeklebt, eingesteckt oder auf sonstige Weise an dem wenigstens einen zu überwachenden Bauteil des Fahrgeschäfts befestigt werden kann. Der Aufnahmebereich 21 wird von einer Stirnfläche an dem ersten Ende des Sensorgehäuses 2 gebildet, wobei aus dem Sensorgehäuse 2 vier elektrische Verbindungen 35 herausragen, die jeweils eingerichtet sind, mit einem Ende eines Messleiters 50 bzw. einer Kontaktschleife 51 verbunden zu werden.

Der Sensorkopf 4 ist dabei im Wesentlichen analog zu den in den Figuren 1 und 2 dargestellten Sensorköpfen 4 ausgebildet und ist eine Ampulle.

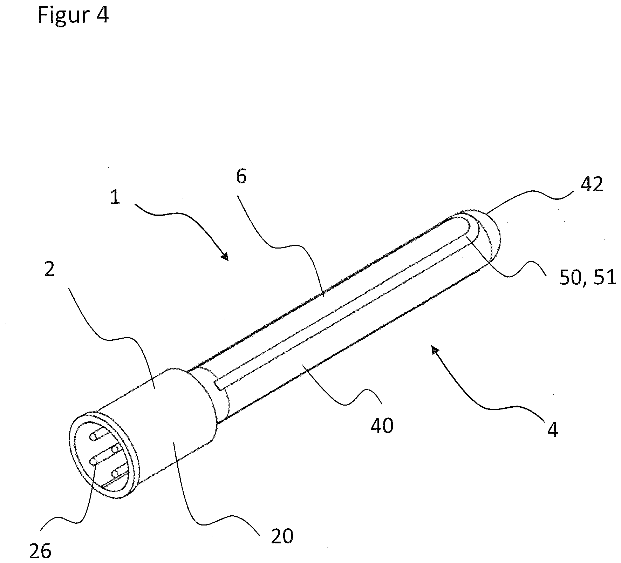

Die von der Ampulle abgewandte Seite der Sensorik 1 ist Figur 4 zu entnehmen, wobei ersichtlich ist, dass der Sensorkabelanschluss 26 vier elektrische Verbindungen 35 aufweist, wobei jede der elektrischen Verbindungen 35 mit einem Ende einer der zwei Kontaktschleifen 51 verbunden ist.

Der schematischen Darstellung der Sensorik in Figur 5 ist zu entnehmen, dass das Sensorgehäuse 2 eine Funkeinheit 28 aufweisen kann, durch welche der elektrische Widerstand bzw. die elektrische Leitfähigkeit des Messleiters 50 überprüft werden kann.

In dem in Figur 5 dargestellten Ausführungsbeispiel ist die Funkeinheit 28 ein RFID-Chip, der kabellos durch ein Lesegerät angesteuert und ausgelesen werden kann. Der RFID-Chip hat eine Identifikationsnummer bzw. Kennung, durch welche er eindeutig identifizierbar ist. Der RFID-Chip wird vom Lesegerät angesteuert und ausgelesen, wodurch der RFID-Chip mittels einer UHF-Frequenz angeregt wird und einen Strom erzeugt, der durch den Messleiter 50 des Sensorkopfs 4 geleitet wird. Das Ergebnis der Messung der elektrischen Leitfähigkeit des Messleiters 50 wird durch den RFID-Chip 28 an das Lesegerät weitergeleitet, welches beispielsweise wiederum mit einem Überwachungskreis des Fahrgeschäfts verbunden ist. In Abhängigkeit von der Leitfähigkeit des Messleiters 50 kann durch den Überwachungskreis ein Schaltsignal, ein Not-Stopp oder dergleichen veranlasst werden.

Die Ampulle 40 weist im Bereich des Ampullenfußes 43 einen langgezogenen Ampullenzipfel 45 auf, der eingerichtet ist, eine kraft- und/oder formschlüssige Kopplung mit dem Sensorgehäuse 2 herzustellen. Hierzu kann beispielsweise in dem Aufnahmebereich 21 an dem Sensorgehäuse 2 ein Federkorb ausgebildet sein, der den Ampullenzipfel 45 umgreift und festklemmt, wodurch der Sensorkopf 4 in dem Aufnahmebereich 21 an dem Sensorgehäuse 2 befestigt ist.

Figur 6 zeigt eine schematische und geschnittene Darstellung des erfindungsgemäßen Sensorkopfs 4. Der Sensorkopf 4 ist aus einer mit einem elektrisch leitfähigen Medium 6 befüllten Ampulle hergestellt, die den Bruchkörper 40 bildet. Der mindestens eine Messleiter 50 des Sensorkopfs 4 besteht aus einer ersten Elektrode 52 und einer zweiten Elektrode 53, welche elektrisch mittels des elektrisch leitfähigen Mediums 6 verbunden sind. Die erste Elektrode 52 und die zweite Elektrode 53 ragen hierzu voneinander isoliert und beabstandet in das Medium 6 innerhalb der Wandung 41 der Ampulle, so dass ein elektrischer Strom zwischen den frei in das Medium ragenden Enden der Elektroden 52, 53 fließen kann. Bei mechanischen Veränderungen des zu überwachenden Bauteils können bereits geringfügige Spannungen zu Rissen in der Ampulle 40 führen, durch die das Medium ausströmen kann, wodurch die elektrische Verbindung zwischen der ersten Elektrode 52 und der zweiten Elektrode 53 unterbrochen wird. Vorteilhafterweise kann vorgesehen sein, dass das Medium 6 in der Ampulle 40 druckbeaufschlagt ist. Dadurch wird das Ausströmen des Mediums 6 bereits bei feinsten Haarrissen begünstigt und mechanische Veränderungen an dem zu überwachenden mindestens einen Bauteil frühzeitig erkannt.

Eine Kombination mindestens eines Messleiters 50, der aus einer Kontaktschleife 51 gebildet wird, mit mindestens einem Messleiter 50, der durch eine erste Elektrode 52, eine zweite Elektrode 53 und dem elektrisch leitfähigen Medium 6 gebildet wird, ist erfindungsgemäß vorgesehen und kann die Messsicherheit erhöhen.

Der Einsatz der Sensorik 1 zur Erhöhung der Sicherheit eines Fahrgeschäfts an einem Fahrgeschäft 80 ist den Figuren 7 und 8 zu entnehmen.

Die Figuren 7 und 8 zeigen einen Ausschnitt aus einem schienengeführten Fahrgeschäft 80, nämlich einer Achterbahn, wobei, wie im Detail in Figur 8 zu entnehmen ist, zwei Sensoriken 1 zur Überwachung der Führung eines schienengeführten Fahrzeugs 85 verwendet werden. Die Sensoriken 1 sind jeweils zwischen zwei benachbarten Führungsrädern 90 auf einer einer Führungsschiene 95 zugewandten Seite derart angeordnet, dass die Sensorköpfe 4 in Richtung der Führungsschiene 95 frei aus dem Sensorgehäuse 2 herausragen. Die Befestigung der Sensoriken 1 an dem schienengeführten Fahrzeug 85 erfolgt aus dem Zusammenspiel des Befestigungsmittels 30 und zwei Gewindemuttern 8, das eine präzise Positionierung der Sensorik 1 an dem schienengeführten Fahrzeug 85 ermöglicht.

Bei einer mechanischen Veränderung an dem schienengeführten Fahrzeug 85 kommen beispielsweise die Sensorköpfe 4 in Kontakt mit der Führungsschiene 95, wodurch die Ampulle 40 zerbricht bzw. zerstört wird. Das Medium 6 kann aus der Ampulle auslaufen und eine farbliche Markierung an den benachbarten Bauteilen zurücklassen. Gleichzeitig wird bei einer Zerstörung der Wandung 41 der Ampulle 40 der mindestens eine Messleiter 50 durchtrennt, so dass der Widerstand des Messleiters 50 bzw. der Kontaktschleife 51 gegen unendlich geht bzw. der Messleiter 50 aufgrund einer Unterbrechung nicht mehr elektrisch leitfähig ist. Während die Unterbrechung des Messleiters 50 mit elektronischen Mitteln erfasst werden kann, kann die farbliche Markierung durch das Medium 6 kamerabasiert beispielsweise mittels UV-Licht automatisch optisch erfasst werden oder bei einer Sichtkontrolle visuell durch das Bedienpersonal.

Somit ist erfindungsgemäß eine Sensorik 1 zur Erhöhung der Sicherheit des Fahrgeschäfts sowie ein Fahrgeschäft zur Verfügung gestellt, dass auf unterschiedliche Weise und mehrfach redundant mechanische Veränderungen wenigstens eines zu überwachenden Bauteils erfassen kann. Die erfindungsgemäße Sensorik 1 kann sowohl kabelgebunden als auch drahtlos betrieben werden, und ermöglicht wenigstens zwei unterschiedliche Messtechniken zur Detektion einer mechanischen Veränderung, insbesondere einer mechanischen Veränderung wie Materialermüdung und Verschleiß an dem wenigstens einen zu überwachenden Bauteil. Einerseits ist stets ein elektrisches Signal generiert und andererseits wird eine visuell und/oder optisch wahrnehmbare Einfärbung des durch die mechanische Veränderung betroffenen Bauteils erreicht.

### Bezugszeichenliste

- 1: Sensorik
- 2: Sensorgehäuse
- 4: Sensorkopf
- 6: Medium
- 7: Führung
- 8: Gewindemutter
- 9: Sensorkabel
- 20: Gehäusekörper
- 21: Aufnahmebereich
- 22: Steckkontakt
- 23: Klemmeinrichtung
- 25: Messelektronik
- 26: Sensorkabelanschluss
- 28: RFID-Chip
- 30: Befestigungsmittel
- 35: elektrische Verbindung
- 40: Bruchkörper
- 41: Wandung
- 42: Bruchkörperkopf
- 43: Bruchkörperfuß
- 44: Überzug
- 45: Bruchkörperzipfel
- 50: Messleiter
- 51: Kontaktschleife
- 52: erste Elektrode
- 53: zweite Elektrode
- 55: Kontaktstelle

## Patentansprüche

1. Sensorkopf (4) für eine Sensorik (1) zur frühzeitigen Erkennung mechanischer Veränderungen, insbesondere Materialermüdung und Verschleiß, wobei der Sensorkopf (4) einen Bruchkörper (40) mit mindestens einem elektrischen Messleiter (50) umfasst,
**dadurch gekennzeichnet, dass**
- der Bruchkörper (40) eine Ampulle mit einer Wandung (41) aufweist, die einen Behälter mit einem Medium (6) umschließt,
- wobei sich der mindestens eine Messleiter (50) in oder auf der Wandung (41) erstreckt, und
- wobei das Medium (6) eine Flüssigkeit und/oder ein Gas umfasst, und dass das Medium (6) mit einem visuell und/oder optisch und/oder olfaktorisch wahrnehmbaren Marker versehen ist.

2. Sensorkopf (4) nach Anspruch 1,
**dadurch gekennzeichnet, dass**
der Bruchkörper (40) aus einem elektrisch isolierenden Werkstoff hergestellt ist.

3. Sensorkopf (4) nach einem der Ansprüche 1 oder 2,
**dadurch gekennzeichnet, dass**
der Bruchkörper (40) aus einem spröden Werkstoff hergestellt ist, vorzugsweise aus einem keramischen Werkstoff oder Glas.

4. Sensorkopf (4) nach einem der Ansprüche 1 bis 3
**dadurch gekennzeichnet, dass**
das Medium (6) elektrisch leitfähig ist, und dass der mindestens eine Messleiter (50) aus einer ersten Elektrode (52) und einer zweiten Elektrode (53) gebildet ist, die in der Ampulle (40) zueinander beabstandet in das Medium (6) ragen.

5. Sensorik (1) zur frühzeitigen Erkennung mechanischer Veränderungen, insbesondere Materialermüdung und Verschleiß, umfassend
- ein Sensorgehäuse (2) mit einem Aufnahmebereich (21) und
- einen Sensorkopf (4) nach einem der Ansprüche 1 bis 4,
- wobei der Sensorkopf (4) an dem Aufnahmebereich (21) an dem Sensorgehäuse (2) gehalten ist und zumindest bereichsweise vom Sensorgehäuse (2) absteht,
- wobei der mindestens eine Messleiter (50) mittels mindestens einer Messelektronik (25) in dem Sensorgehäuse (2) elektrisch verbunden ist, und
- wobei durch die Messelektronik (25) der elektrische Widerstand des mindestens einen Messleiters (50) erfassbar ist.

6. Sensorik (1) nach Anspruch 5,
**dadurch gekennzeichnet, dass**
wenigstens eine elektrische Verbindung (35) zwischen dem Messleiter (50) und der Messelektronik (25) eine Steckverbindung ist.

7. Sensorik (1) nach einem der Ansprüche 5 oder 6,
**dadurch gekennzeichnet, dass**
der Sensorkopf (4) durch die elektrische Verbindung (35) form- und/oder kraftschlüssig in dem Aufnahmebereich (21) am Sensorgehäuse (2) gehalten ist.

8. Sensorik (1) nach einem der Ansprüche 5 bis 7,
**dadurch gekennzeichnet, dass**
in dem Aufnahmebereich (21) zwischen dem Sensorgehäuse (2) und dem Sensorkopf (4) eine Führung (7) vorgesehen ist, und dass die Führung (7) aus einem dämpfenden Werkstoff hergestellt ist.

9. Sensorik (1) nach einem der Ansprüche 5 bis 8,
**dadurch gekennzeichnet, dass**
das Medium in dem Sensorkopf (4) druckbeaufschlagt ist.

10. Sensorik (1) nach einem der Ansprüche 5 bis 9,
**dadurch gekennzeichnet, dass**
der Sensorkopf (4) im Wesentlichen eine zylindrische Form aufweist, und dass der Sensorkopf (4) in dem Aufnahmebereich (21) bereichsweise durch das Sensorgehäuse (2) radial umgeben ist.

11. Sensorik (1) nach einem der Ansprüche 5 bis 10,
**dadurch gekennzeichnet, dass**
das Sensorgehäuse (2) wenigstens ein Befestigungsmittel (30) aufweist, das eingerichtet ist, das Sensorgehäuse (2) an wenigstens einem zu überwachenden Bauteil zu befestigen.

12. Sensorik (1) nach Anspruch 11,
**dadurch gekennzeichnet, dass**
das mindestens eine Befestigungsmittel (30) ein Außengewinde aufweist.

13. Sensorik (1) nach einem der Ansprüche 5 bis 12,
**dadurch gekennzeichnet,**
**dass** das Sensorgehäuse (2) einen Sensorkabelanschluss (26) aufweist, der eingerichtet ist, mit einem Überwachungskreis eines Fahrgeschäfts verbunden zu werden.

14. Sensorik (1) nach einem der Ansprüche 5 bis 13,
**dadurch gekennzeichnet, dass**
die Messelektronik (25) eine Funkeinheit (28) aufweist, durch die der elektrische Widerstand des mindestens einen Messleiters (50) kabellos abgefragt werden kann.

15. Sensorik (1) nach einem der Ansprüche 5 bis 14,
**dadurch gekennzeichnet, dass**
die Funkeinheit (28) ein RFID-Chip ist, der angesteuert und ausgelesen werden kann.

16. Fahrgeschäft mit einer Sensorik (1) nach einem der Ansprüche 5 bis 15.

17. Fahrgeschäft nach Anspruch 16,
**dadurch gekennzeichnet, dass**
wenigstens ein Funklesegerät vorgesehen ist, dass eingerichtet ist, mit der Funkeinheit (28) der Sensorik (1) zu kommunizieren.

18. Fahrgeschäft nach Anspruch 16 oder 17,
**dadurch gekennzeichnet, dass**
wenigstens eine Kamera vorgesehen ist, die eingerichtet ist, ein aus dem Bruchkörper (40) austretendes Medium (6) optisch zu erfassen.

## Claims

1. Sensor head (4) for a sensor system (1) for the early detection of mechanical changes, in particular of material fatigue and wear, wherein the sensor head (4) comprises a breaking body (40) with at least one electric measuring conductor (50),
**characterized in that**
- the breaking body (40) comprises an ampoule having a shell (41) which enclosed a receptacle containing a medium (6),
- wherein the at least one measuring conductor (50) extends in or on the shell (41), and
- wherein the medium (6) comprises a liquid and/or a gas and the medium (6) is provided with a visually and/or optically and/or olfactorily discernible marker.

2. Sensor head (4) in accordance with claim 1,
**characterized in that**
the breaking body (40) is made of an electrically insulating material.

3. Sensor head (4) in accordance with either of claims 1 or 2,
**characterized in that**
the breaking body (40) is made of a brittle material, preferably of a ceramic material or glass.

4. Sensor head (4) in accordance with any of claims 1 to 3,
**characterized in that**
the medium (6) is electrically conductive and in the at least one measuring conductor (50) is formed of a first electrode (52) and of a second electrode (53) which extend in the ampoule and into the medium (6) at a distance to each other.

5. Sensor system (1) for the early detection of mechanical changes, in particular of material fatigue and wear, comprising
- a sensor housing (2) having a receiving area (21) and
- a sensor head (4) in accordance with any of claims 1 to 4,
- wherein the sensor head (4) is held in the receiving area (21) on the sensor housing (2) and at least partially projects from the sensor housing (2),
- wherein the at least one measuring conductor (50) is electrically connected in the sensor housing (2) by means of at least one electronic measurement system (25), and
- wherein the electrical resistance of the at least one measuring conductor (50) can be detected by means of the electronic measurement system (25).

6. Sensor system (1) in accordance with claim 5,
**characterized in that**
at least one electrical connection (35) between the measuring conductor (50) and the electronic measurement system (25) is a plug connection.

7. Sensor system (1) in accordance with either of claims 5 or 6,
**characterized in that**
the sensor head (4) is positively or frictionally held in the receiving area (21) on the sensor housing (2) by means of the electric connection (35).

8. Sensor system (1) in accordance with any of claims 5 to 7,
**characterized in that**
a guide (7) is provided in the receiving area (21) between the sensor housing (2) and the sensor head (4), and **in that** the guide (7) is made of a damping material.

9. Sensor system (1) in accordance with any of claims 5 to 8,
**characterized in that**
the medium in the sensor head (4) is pressurized.

10. Sensor system (1) in accordance with any of claims 5 to 9,
**characterized in that**
the sensor head (4) is of an essentially cylindrical shape, and **in that** the sensor head (4) is partially radially surrounded in the receiving area (21) by the sensor housing (2).

11. Sensor system (1) in accordance with any of claims 5 to 10,
**characterized in that**
the sensor housing (2) comprises at least one means of fixation (30) which is implemented to secure the sensor housing (2) on at least one component which is intended to be monitored.

12. Sensor system (1) in accordance with claim 11,
**characterized in that**
the at least one means of fixation (30) comprise an external thread.

13. Sensor system (1) in accordance with any of claims 5 to 12,
**characterized in that**
the sensor housing (2) comprises a sensor cable connection (26) which is implemented to be connected to the monitoring circuit of an amusement ride.

14. Sensor system (1) in accordance with any of claims 5 to 13,
**characterized in that**
the electronic measurement system (25) comprises a wireless unit (28), by means of which the electric resistance of the at least one measuring conductor (50) can be wirelessly retrieved.

15. Sensor system (1) in accordance with any of claims 5 to 14,
**characterized in that**
the wireless unit (28) is an RFID chip which can be controlled and read out.

16. Amusement ride having a sensor system (1) in accordance with any of claims 5 to 15.

17. Amusement ride in accordance with claim 16,
**characterized in that**
at least one wireless reading device is provided which is implemented to communicate with the wireless unit (28) of the sensor system (1).

18. Amusement ride in accordance with claim 16 or 17,
**characterized in that**
at least one camera is provided which is implemented to optically detect a medium (6) escaping from the breaking body (40).

## Revendications

1. Tête de capteur (4) pour un dispositif de détection (1) pour la détection précoce de variations mécaniques, notamment de fatigue de matière et d'usure, la tête de capteur (4) comportant un organe de rupture (40) avec au moins un conducteur de mesure électrique (50),
tête de capteur **caractérisée en ce que**
- l'organe de rupture (40) comporte une ampoule avec une paroi (41) entourant un récipient contenant un milieu (6),
- ce conducteur de mesure (50) s'étendant dans ou sur la paroi (41) et,
- le milieu (6) est un liquide et/ou un gaz et le milieu (6) est muni d'un marqueur perceptible de façon visuelle et/ou optique et/ou olfactive.

2. Tête de capteur (4) selon la revendication 1,
**caractérisée en ce que**
l'organe de rupture (40) est réalisé en un matériau électro-isolant.

3. Tête de capteur (4) selon l'une des revendications 1 ou 2,
**caractérisée en ce que**
l'organe de rupture (40) est réalisé en un matériau cassant de préférence en une matière céramique ou en verre.

4. Tête de capteur (4) selon l'une des revendications 1 à 3,
**caractérisée en ce que**
le milieu (6) est électro-conducteur et
au moins un conducteur de mesure (50) est formé par une première électrode (52) et une seconde électrode (53) venant en saillie dans l'ampoule (40) en étant écartées l'une de l'autre dans le milieu (6).

5. Dispositif de détection (1) pour détecter de façon précoce les variations mécaniques notamment des fatigues de matière et de l'usure comprenant :
- un boîtier de capteur (2) avec une zone de réception (21), et
- une tête de capteur (4) selon l'une des revendications 1 à 4,
- la tête de capteur (4) étant tenue à la zone de réception (21) du boîtier de capteur (2) et venant en saillie au moins par zones par rapport au boîtier de capteur (2),
- le conducteur de mesure (50) étant relié électriquement par au moins une électronique de mesure (25) au boîtier de capteur (2), et
- l'électronique de mesure (25) saisit la résistance électrique du conducteur de mesure (50).

6. Dispositif de détection (1) selon la revendication 5,
**caractérisé en ce que**
la liaison électrique (35) entre le conducteur de mesure (50) et l'électronique de mesure (25) est une liaison par enfichage.

7. Dispositif de détection (1) selon l'une des revendications 5 ou 6,
**caractérisé en ce que**
la tête de capteur (4) est tenue par la liaison électrique (35) par une liaison par la forme et/ou la force dans la zone de réception (21) sur le boîtier de capteur (2).

8. Dispositif de détection (1) selon l'une des revendications 5 à 7,
**caractérisé par**
un guide (7) dans la zone de réception (21) entre le boîtier de capteur (2) et la tête de capteur (4), et
le guide (7) est réalisé en un matériau amortisseur.

9. Dispositif de détection (1) selon l'une des revendications 5 à 8,
**caractérisé en ce que**
le milieu dans la tête de capteur (4) est soumis à la pression.

10. Dispositif de détection (1) selon l'une des revendications 5 à 9,
**caractérisé en ce que**
la tête de capteur (4) a une forme essentiellement cylindrique, et
la tête de capteur (4) est entourée radialement dans la zone de réception (21) au moins par zones par le boîtier de capteur (2).

11. Dispositif de détection (1) selon l'une des revendications 5 à 10,
**caractérisé en ce que**
le boîtier de capteur (2) comporte au moins un moyen de fixation (30) conçu pour fixer le boîtier de capteur (2) à au moins un composant à surveiller.

12. Dispositif de détection (1) selon la revendication 11,
**caractérisé en ce que**
au moins un moyen de fixation (30) comporte un filetage extérieur.

13. Dispositif de détection (1) selon l'une des revendications 5 à 12,
**caractérisé en ce que**
le boîtier de capteur (2) comporte un branchement de câbles de capteur (26) conçu pour être relié à un circuit de surveillance d'un équipement mobile.

14. Dispositif de détection (1) selon l'une des revendications 5 à 13,
**caractérisé en ce que**
l'électronique de mesure (25) comporte une unité radio (28) permettant de demander par une liaison sans fil, la résistance électrique d'au moins un conducteur de mesure (50).

15. Dispositif de détection (1) selon l'une des revendications 5 à 14,
**caractérisé en ce que**
l'unité radio (28) est une puce RFID qui peut être commandée et lue.

16. Equipement mobile comportant un dispositif de détection (1) selon l'une des revendications 5 à 15.

17. Equipement mobile selon la revendication 16,
**caractérisé en ce que**
il est prévu au moins un appareil de lecture radio conçu pour communiquer avec l'unité radio (28) du dispositif de détection (1).

18. Equipement mobile selon l'une des revendications 16 ou 17,
**caractérisé en ce que**
il est prévu au moins une caméra conçue pour saisir de manière optique tout milieu (6) sortant de l'organe de rupture (40).
